# EUROPEAN PATENT SPECIFICATION

(11) **EP 1 062 494 B1**
(45) Date of publication and mention of the grant of the patent: **24.06.2015**
(21) Application number: 99934338.7
(22) Date of filing: 19.02.1999
(51) Int. Cl.: G01N 15/14

(54) **A VIBRATORY SYSTEM FOR A SORTING FLOW CYTOMETER**
EIN VIBRATIONSSYSTEM FÜR EIN SORTIERENDES DURCHFLU ZYTOMETER
SYSTEME VIBRATOIRE POUR CYTOMETRE DE FLUX DE TRIAGE

(30) Priority: 20.02.1998 US 75612 P
(43) Date of publication of application: 27.12.2000
(73) Proprietor: XY, LLC, Navasota, TX 77868 (US); Cytomation, Inc., Fort Collins, CO 80525 (US)
(72) Inventor: BUCHANAN, Kristopher, S., Fort Collins, CO 80526 (US); HERICKHOFF, Lisa, Fort Collins, CO 80524 (US); MALACHOWSKI, George, C., Fort Collins, CO 80524 (US); OTTENBERG, Matthias, J., G., Fort Collins, CO 80525 (US); SEIDEL, George, LaPorte, CO 80535 (US); FERGUSON, Douglas, H., Pennock, MN 56279 (US)
(74) Representative: Kador & Partner
(86) International application number: PCT/US1999/003638
(87) International publication number: WO 1999/042810

(56) References cited:
- DE-U1- 9 316 089
- JP-A- 5 206 687
- US-A- 4 114 194
- US-A- 4 673 288
- US-A- 4 790 653
- US-A- 4 849 769
- US-A- 5 602 039
- US-A- 5 641 457
- US-A- 5 643 796

## Description

### I. TECHNICAL FIELD

The invention focuses upon a device which may be used to unclog nozzles, dislocate gas, or clean exterior surfaces of flow cytometers used in the cytometry industry, which are subject to clogging, entrapping gas, or collecting adherents to exterior surfaces.

### II. BACKGROUND

The desire to unclog, dislocate entrapped gas, and clean nozzles or a nozzle body has been known in some industries for many years. This desire has been quite acute for quite some time in the cytometry field. Cytometers are sometimes used to separate or sort particles from one another based upon the differences detected by shining a high intensity light upon each particle then discerning differences between the amount of light reflected from each particle. These particles may be quite variable based upon the application of the user. They may be biological cells of plant or animal matter or particles of other materials. All of these various particles will vary in size, shape, homogeneity, texture, and adhesion properties.

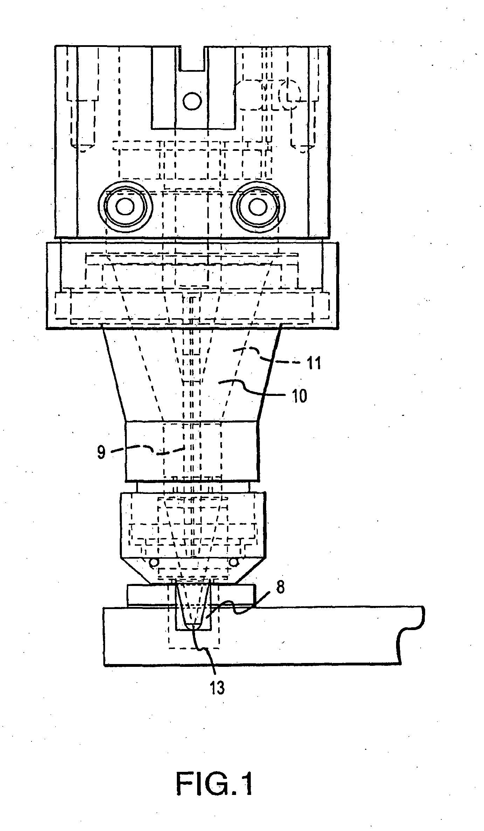

As shown in Fig. 1, the sheath fluid (8) is forced into the nozzle chamber (11) surrounding the sample tube or sample introduction element (9) at the same time that the sample is injected through the sample tube into the nozzle chamber. Both fluids travel down the chamber with the sample remaining in the center of the chamber. In an ideal sorting-type of setup the sample particles travel in line to the orifice where they exit a microscopic nozzle orifice or nozzle aperture (13) (typically 50-250 microns) into the free fall area within which droplets form and fall. Generally, at this point, the characteristics of the sample are determined at high speeds, sometimes as rapidly as 40,000 drops per second. In the typical application, the samples are then sorted at high speeds into containers based upon the detected characteristics. Thus, predictability and consistency are crucial to accurate detection
and to accurate sorting of the samples. Unwelcome variations in the stream emanating from the nozzle, either in volume or in direction or both, may have significant effects on the ability of the user to provide accurate results.

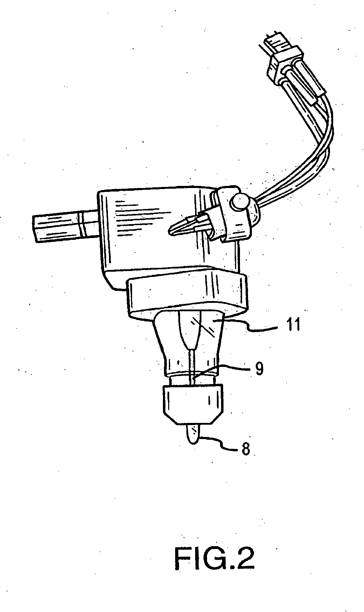

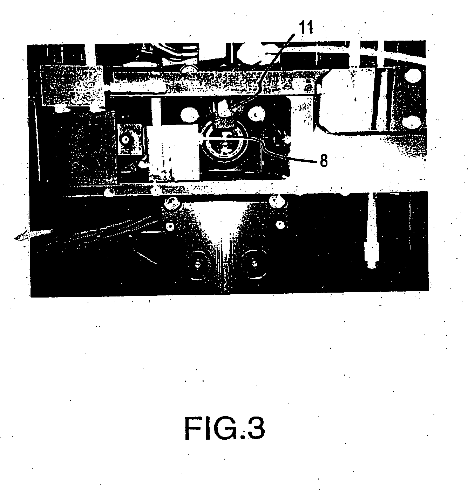

In practice, particles and gas in the sheath fluid or nozzle aperture adherents or the sample particles injected into the nozzle chamber accumulate faster that they can exit the nozzle and can begin filling the nozzle chamber or occluding the nozzle aperture with sample particles or gas bubbles. This accumulation of particles or gas can cause partial or total clogs in the nozzle or nozzle aperture. Figs. 1, 2 and 3 show a typical cytometer nozzle or exterior surface of a flow cytometer nozzle and area in which such clogging may occur. The problem of clogged nozzles also causes problems relating to the limited shelf life of samples which may be biological in nature and any delays relating to equipment malfunction may require completely starting an experiment from scratch.

Another source of nozzle clogs is related to homogeneity of the sample. The samples preparer, for some reason, may be unable to filter the sample prior to sorting it on the cytometer or the filtered samples may agglutinate. In this case, some of the particles may be larger than the nozzle orifice which will immediately cause clogs.

More specifically, significant advances on sorting sperm for a variety of purposes have been made in recent years. Yet, this type of sample is especially prone to clogging. At present, the only quantitative technique used to achieve the separation of X-and Y-chromosome bearing sperm has been that involving individual discrimination and separation of the sperm through the techniques of flow cytometry. This technique appeared possible as a result of advances and discoveries involving the quantitative dye absorption of X-and Y-chromosome bearing sperm. This was discussed early in U. S. Patent No. 4362246 and significantly expanded upon through the techniques disclosed by Lawrence Johnson in U. S. Patent No. 5135759. The Johnson technique of utilizing flow cytometry to separate X-and Y-chromosome bearing sperm has been so significant an advancement that it has for the first time made the commercial separation of such sperm feasible. While still experimental, separation has been significantly enhanced through the utilization of high speed flow cytometers such as the MoFlo® flow cytometer produced by Cytomation, Inc. and discussed in a variety of other patents including U. S. Patent Nos. 5150313,5602039,5602349, and 5643796 as well as international PCT patent publication WO 96/12171. While the utilization of Cytomation's MoFlo® cytometers has permitted great increases in speed, and while these speed increases are particularly relevant given the high number of sperm often used, certain problems have still remained. In spite of the almost ten-fold advances in speed possible by the MoFlo® flow cytometer, shorter and shorter sorting times have been desired for several reasons. First, it has been discovered that as a practical matter, the sperm are time-critical cells. Their fertility decreases with increased delay time. Second, the collection, sorting, and insemination timings has made speed an item of high commercial importance. Thus, the time critical nature of the sperm cells and the process has made speed an essential element in achieving high efficacy and success rates. Naturally, clogging which greatly increases the time required for sorting of the sperm, can be debilitating to the entire success of the process.

Clogging can also occur from the particular sheath fluid used in cytometry operations. The sheath fluid typically used on a cytometer is that of a saline solution including other additives as needed. This saline may form salt crystals on the outside on the nozzle orifice and slowly restrict the exit orifice of the nozzle or otherwise disturb the natural spraying direction of the nozzle. This may result in a partial or complete clog of the nozzle, and can exacerbate problems caused by sample clumping.

Perhaps one of the most significant problems that those in some fields have faced is that of clearing the orifice of the nozzle without damaging it in some way. While this basic concept seems quite simple, implementation is not so straightforward. The operator or other user was faced with the decision to attempt unclogging in situ while it is attached to the cytometer and properly aligned or to remove the nozzle, clean it and then restart the very tedious and slow realignment steps which are necessary if the nozzle is removed before it can be used again for sorting.

One concept put forward for clearing a nozzle in situ involves inserting a thin wire or similar device into the orifice of the nozzle. While this may seem quite straightforward, the problem of finding the orifice of the nozzle which may be 50 to 250 microns in diameter is quite difficult. Further the small diameter of the wire would make it far too delicate to practically thread into the orifice. Another complication to this approach is the small and difficult-to-reach area where a cytometer nozzle is typically located on the instrument. Even if the aforementioned problems were overcome, the nozzle would likely become damaged as a result of the insertion.

Another concept which has been discussed involves the use of applying a vacuum from the outside of the nozzle orifice, which suffers from a clog or particle. This approach has practical limitations involving sealing around the exterior of the nozzle to allow a vacuum to develop. A vacuum source would need to be generated of sufficient magnitude to be of benefit to the nozzle. This approach is complicated by touching the nozzle in situ and thereby disturbing its sensitive alignment and flow path. Potentially, the vacuum source could make a nozzle clog worse by pulling the particulates inside the nozzle closer and packing them harder into the orifice. Even if a nozzle is unclogged by this method, the operator might be forced to realign the cytometer before using the cytometer.

Another concept used solely in the context of analytical cytometers which do not form droplets is the use of a piezoelectric crystal to set up localized vibrations around the sample injector or sensing aperture for declogging. This concept, shown in US Patent No. 4.673.288 however, has never been developed or applied for a system compatible with the unique requirements of drop flow cytometry for dislocation of particles. Moreover, the disclosure of using oscillations with respect to analytical flow cytometry teaches the use of pressure change to dislocate gas which teaches away from the disclosed invention.

Another problem particular to cytometry and addressed by this invention is that of trapped air bubbles or gas in the fluidic components of a cytometer. The bubbles can form a compressible medium in the nozzle chamber that affects the precision alignment of the flow stream. In practice, the bubbles are sometimes difficult to remove from the chamber or de-bubble the chamber due, perhaps, to surface tension of the bubble to the walls of the chamber and within the sheath fluid itself. An operator generally is delayed in processing the sample through the cytometer when bubbles are present in the nozzle chamber, thus reducing the efficiency of the process. The cytometer operator previously had no tool to address the problem of trapped gases and had no choice but to wait some amount of time, which would vary greatly, and allow the bubbles to naturally migrate to areas of lesser concern.

Another concern particular to drop flow cytometry systems is in situ cleaning of either the exterior or the interior of the drop flow cytometer nozzle. Adherents which collect on the nozzle disturb the flow path and alignment with the flow path sensing system. Routine cleaning of the nozzle surfaces can maintain the flow path and alignment parameters without having to disassemble the nozzle and clean the parts separate from the drop flow cytometer. Previously, no tool existed to address the problem of cleaning such surfaces of the drop flow cytometer nozzle.

As to both the cytometry industry and the overall desire to unclog nozzles in situ in any industry, the present invention discloses techniques which overcome virtually every one of the previous problems in a practical fashion. Perhaps surprisingly, it satisfies a long-felt need to achieve unclogging, de-bubbling and cleaning of a nozzle in situ with little or no damage to the nozzle and without significantly disturbing it in any way. It is perhaps surprising to those involved in the use of cytometers to see how the problem could be solved in a safe, economical manner without requiring the removal of nozzles.

DE 93 16 089 (U1) describes a cleaning tool for textile, dishes or hands.

US Patent No. 4, 849,769 relates to noncontact fluid printing devices conventionally known as "ink jet" or "fluid jet" printers and, more particularly, to a method for ultrasonically cleaning solid particles, dried ink or other contaminates from the fluid supply system, print head and orifice plate through which ink jet droplets emerge.

JP 5206687 (A) discloses a device suitable for automatic cleaning of a nozzle by inserting the lower end of the nozzle into a moving path of a loading head making an index rotation for cleaning the lower end.

US Patent No. 4,114,194 relates to ultrasonic cleaners in which a liquid is ultrasonically agitated to clean articles immersed in the liquid.

### III. DISCLOSURE OF INVENTION

The present invention relates to a flow cytometer nozzle unclogging and de-bubbling tool according to claim 1. In a basic form, the concept involves using an energy converter which creates mechanical oscillations (as selected with a oscillation selection element or by sweeping a range of oscillations), and with a media or oscillation coupling element present (such as a fluid, gel or other appropriate media) or through a mechanical couple, and transferring the energy from the source and presenting (coupling) it to the problem area or to allow the media in cooperation with the vibration (either ultrasonic or subsonic) to dislodge any matter in the nozzle which may be causing the clog. Such a technique offers advantages to the operator of the cytometer in allowing machine downtime and any resulting realignment to be greatly reduced, thereby making the operation of a cytometer to be more predictable and increasing the likelihood of successfully sorting a particular sample. The inventive tool excites the nozzle and surrounding fluid in such a way that the air quickly migrates to areas where it can be removed. The invention does this by providing a means for a vibratory chamber of media in which to immerse the nozzle, especially the orifice of the nozzle, into the vibrating media in the chamber while the nozzle is still mounted and fluidically attached or by means of mechanical coupling to the exterior surface of the nozzle.

Based upon testing which has occurred to date, it functions particularly well on partially clogged nozzles. It appears to typically unclog these nozzles and allow the cytometer stream to return to its original position, thereby eliminating the need for adjustment, so typical prior to the present invention.

One of the broad objects of the invention is to allow for an unclogging tool or portable member configured so as to mechanically couple mechanical oscillations to the exterior of the nozzle to be used while the nozzle is present on the cytometer, in situ. Thus, one goal includes making the tool small enough to fit within the existing spaces surrounding the nozzle on cytometers. Another goal would be to allow a means for the tool to be moved into position or have a portable device such that the chamber or portable surface configured so as to mechanically couple mechanical oscillations to the exterior of the nozzle is presenting the vibratory media to the nozzle orifice or nozzle exterior and then easily removed from this area such that normal cytometer functions can take place. This goal is accomplished manually (hand held) with a portable device. Likewise, it may be manually activated independent of flow cytometer operation conditions when the operator notices a variation in the processing or it may be automated by sensors detecting a clogging or in response to flow cytometer conditions.

Another goal would be to allow the use of such a tool that will not harm the nozzle. A goal for this invention is to unclog the nozzle while preventing any aspects to the procedure which could effect the positioning of the nozzle or the original condition of the nozzle orifice.

Another broad object of the invention is to provide a means of removing air bubbles from the nozzle or debubbling. Some of the goals for this object remain the same as for unclogging in that the tool is generally small enough to fit in the space allowed and may be easily moved out of the way after use. A further goal would be to allow the cytometer operator to pull a vacuum on the inside of the nozzle chamber while presenting a surface configured so as to mechanically couple mechanical oscillations to the exterior of the nozzle or a chamber of media to the nozzle and vibrating the media and therefore the nozzle with sufficient energy that any air bubbles in the nozzle will no longer cling to the sides of the nozzle, but will rise to areas where they may removed through fluidic hoses and tubes.

Yet another goal would be to allow for different cytometer nozzles on different cytometer machines to be unclogged and debubbled with this invention. Further, it is a goal to provide this in an economical manner such that it is affordable to the cytometry user.

### IV. BRIEF DESCRIPTION OF THE DRAWINGS

Fig. 1 is a side view of a nozzle assembly showing the sample tube, inner cavity, sheath fluid, orifice and the positioning of a oscillating portable member, oscillation coupling element, and fluid retaining element.
Fig. 2 is a photo of a typical drop flow cytometer nozzle assembly, showing on one end the nozzle through which is an orifice which may become clogged.
Fig. 3 is a photo of a typical cytometer and a nozzle in situ where it would become clogged.
Fig. 4 is a photo of the tool according to the present invention is portable and having a vibration generator or energy source (1), flexible cable transfer element (2), and energy converter (3) which may be used to provide energy to the portable device (4).

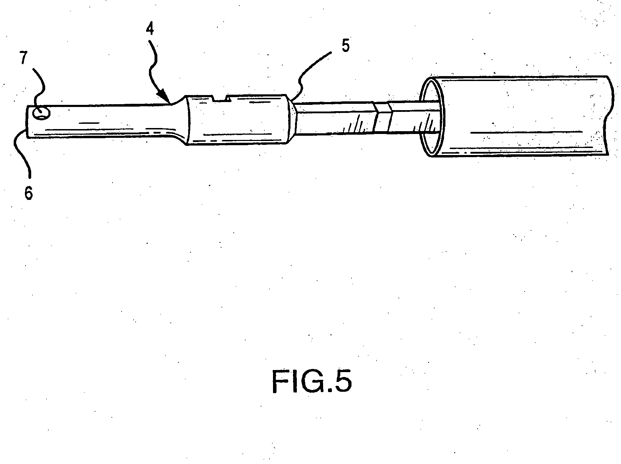

Fig. 5 is a photo of a portable device (4) which is one embodiment of the invention which has a cavity or cup surface (7), an attachment end or joining element (5), and activating end (6).

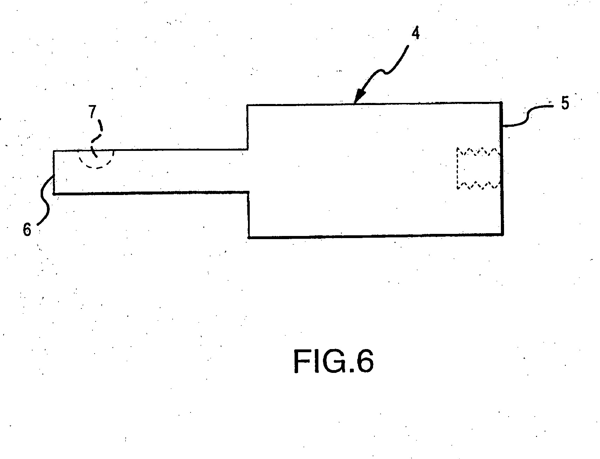

Fig. 6 is a sketch of a side view of a portable device (4) showing the cavity cup surface (7), an attachment end (5), and activating end (6).
Fig. 7 is a sketch of a portable device (4) and cavity or cup surface (7) of a permanent installation which may be mounted to a cytometer and which allows these components to move to the nozzle area and then be moved aside.
Fig. 8 is a sketch of a portable device (4) with a media trap or instrument shield (12) and a liquid evacuation element () which could be employed in an alternative embodiment to collect any liquids or media before they could collect in an unwanted area.

### V. BEST MODE FOR CARRYING OUT THE INVENTION

The preferred embodiment is that of a portable device which includes a surface configured to mechanically couple oscillation to the extrior of the flow cytometer nozzle or a cavity which holds a media (such as a fluid, gel, or other appropriate energy transferring media) which creates a bath or oscillations coupling element which may be vibrating. This cavity is presented to the nozzle, especially the orifice area, and allows the nozzle orifice to be at least partially immersed into the bath where any undesirable material may be removed or cleaned or the energy may be used for other purposes such as removing air bubbles from the nozzle.

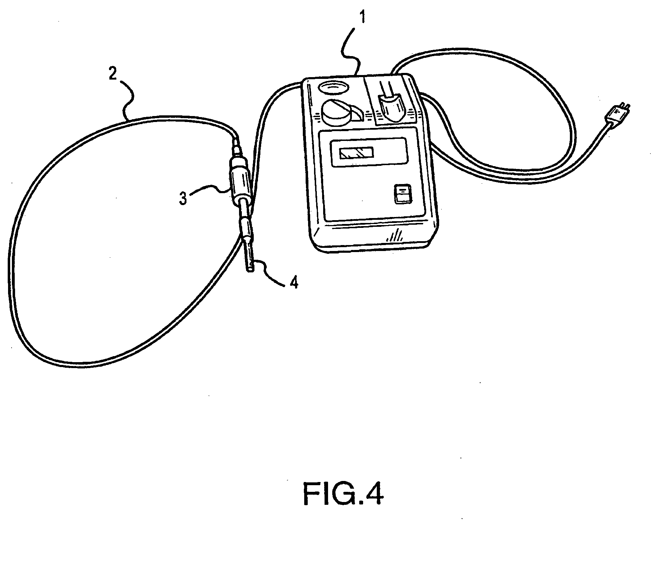

As shown in Fig. 4, part of the unit involves a source of vibrating energy, or vibration generator or energy converter (1), available from a variety of suppliers as would be known to those of ordinary skill in the art. This generator may develop a variety of frequencies of selected or varying amplitudes designed to optimally excite the portable device (that is for coupling oscillations to the exterior of the nozzle body that has specific selectable parameters such as a cleaning parameter, a gas dislocations parameter, or particle disintegration parameter, or sperm cell sorting, or alternately are chosen by sweeping a range of oscillations). In the preferred embodiment, the vibration generator will have a amplitude and/or frequency adjustment or oscillation variation element or oscillation selector element which allows the operator to set or select the desired power level or sweep a range of oscillations prior to or during use (this can be critical as at least some particles and gas will have oscillation parameters that are highly dependant on flow cytometer operating conditions). The energy source (1) is connected to a transfer element (2), as shown in Fig. 4, which conducts the electrical signals to an energy converter (3). The transfer element may be flexible to allow the user to move the energy converter to the using area and of sufficient length to not require moving the vibration generator. The energy converter (3) turns the electrical energy from the energy source into mechanical oscillations and is connected to the attachment end (5) of the portable device (4). The energy converter may in turn be connected to a mechanically isolated receptacle so that the energy converter ishand held. In the preferred embodiment, the attachment end of the portable device may be circular in cross section and has a female thread or joining element in it which allows the portable device to be attached to the energy converter. The attachment end (5) of the portable device may be circular to eliminate any thin walled sections of the portable device which might be susceptible to cracking from stresses caused by the axial vibration of the portable device. As would be known to those with skill in the art, the portable device (4) is tuned by varying the dimensions of or selecting or sweeping the frequency of the vibration generator (1). In one embodiment for a cytometer nozzle, the portable device may have an overall length of approximately 4-5 inches. The activating end (6) of the portable device having the cavity or surface configured to the exterior surface of the flow cytometer nozzle or surface configured to cup a nozzle tip (7) may be approximately 0.5 inches high and approximately 0.3 inches wide. The cavity itself can be adjusted for a variety of nozzles and could be a hole approximately 0.25 inches in diameter and slightly less than the 0.5 inches height of the portable device and can have or be a self alignment element for self alignment with the nozzle surface or a plurality interchange portable members with surfaces configured to approximately match portions of the exterior of the nozzle surface which may be attached and detached with a joining element.

### Portable Device Material

In the preferred embodiment, the portable device (4) may be constructed of titanium. This material transmits the energy developed by the energy converter (3) efficiently. Further, it has sufficient stiffness to allow the portable device to reflect the vibration energy back to the converter and develop various modes of vibration along the axis of the portable device. This attribute allows the portable device to be optimized such that sufficient energy is developed in the cavity (7), allowing the media in the cavity to be vibrationally excited to an optimum amount which effectively cleans the nozzle orifice while substantially maintaining the media in the cavity or in conjuction with a fluid retaining element. This material further has the advantage of not easily oxidizing or corroding when presented to saline and other fluids commonly used in conjunction with cytometers. This material is commonly used to make ultrasonic vibration portable devices by the manufacturers of such devices which are employed to do functions such as ultrasonic welding and forming of material.

In the preferred embodiment, the user would determine that the device is needed for a debubbling or unclogging operation and would fill the portable device cavity with a cleaning media. This media may be water, saline, or other fluid, compatible with cytometers. It may also be a gel or solid which might remain in the cavity with some stability. Naturally, it could be a variety of other media, including a granular or even a solid media in appropriate instances. After filling the cavity (7) in the portable device (4) while holding the energy converter (3) horizontally with the cavity facing upward, the operator could switch on the vibration generator and set or select or variably sweep the power level to the desired setting. The operator could then hold or hand hold the converter such that the nozzle orifice or nozzle exterior is at least partially immersed by the media or oscillation coupling element in the cavity and also adjoins at least part of the interior surface of the nozzle. The operator could hold the energy converter in this position for a time period such as a few seconds. While doing this operation the fluid lines going into the nozzle could remain pressurized. A liquid evacuation element could remove liquid from the cup so that the flow cytometer could be operated while coupled to the portable member. The operator could then move the converter such that the portable device is not obstructing the normal spray path of the nozzle. The operator could then ascertain whether the nozzle was spraying normally or whether all air bubbles had been removed, and if not, repeat the operation.

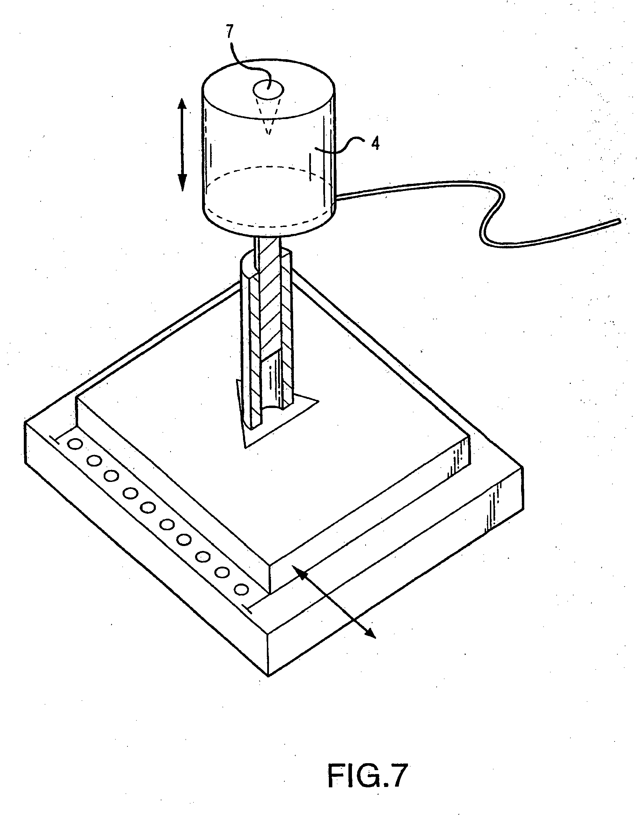

Another embodiment which is not part of the invention is that of a cavity or cup or energy converter which is designed to be part of an instrument or product. This may be accomplished by using a first driver system for drop formation operation and a second driver circuit to drive the same drop formation oscillation system at different selected oscillation parameters or sweep a range of oscillations parameters so as to provide gas dislocation, particle disintegration, and cleaning parameters. Alternately, a second oscillation system driven by the second driver system could be employed. As shown in Fig. 7, the cavity (7) and portable device (4) may be attached to a moving member or automated movement which could be moved to an area near the nozzle for any unclogging or debubbling operations and then moved out of the way. As would be known to those with skill in the art, such an arrangement could be mounted to the cytometer or some adjacent surface. It could be retractably placed at an indexed position to engage the cavity with the nozzle and then removed after attempting the declogging or debubbling. Such an arrangement could include hydraulic positioning, electromechanical positioning (such as by sensors, slides, limit switches and so forth). The embodiment could be actuated or triggered by an activation element manually or independant of flow cytometer operation conditions by an operator or when a declogging situation is noticed. Alternatively, it could be actuated automatically or in response to flow cytometer conditions when a sensor senses a declogging situation, such as by a reduced flow, an aberration in the flow direction, and so forth. Also as shown in Fig. 7, the portable device (4) can be of a variety of shapes or a plurality of interchangeable tools as might be appropriate to the particular configuration and purposes.

Another embodiment involves the use of a more solid transfer of the vibration energy to the nozzle such as through the portable device or energy converter itself or through a solid media or compressible element with a three-dimension surface in or on the portable device or energy converter. The vibrating object may be placed against the nozzle which may transfer vibratory energy to the nozzle which may be used for air bubble removal or excitation of the fluid inside the nozzle in such a way as to unclog, or to clean the nozzle.

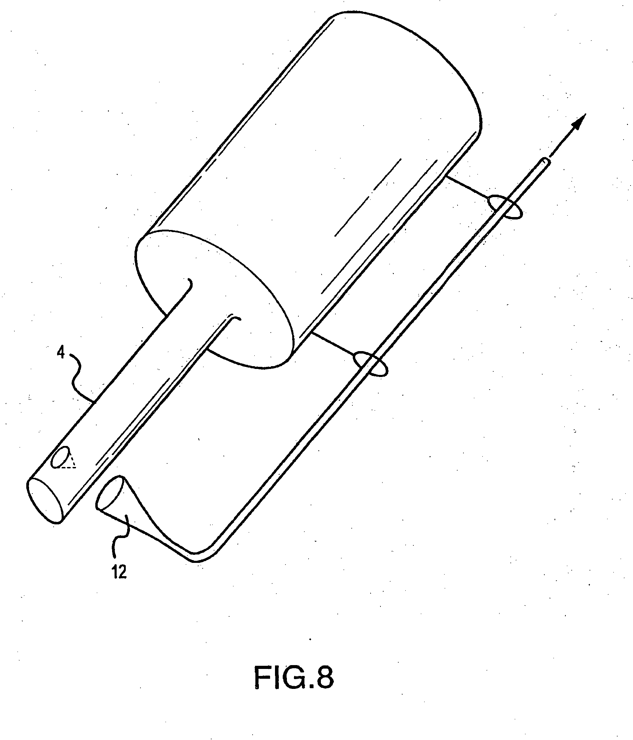

An alternative embodiment, shown in Fig. 8, includes a trap or droplet shield (12) for media which may be displaced from the cavity when the nozzle is placed into the cavity. These materials, if not trapped, could land on high voltage components below the nozzle or on optical components or analysis system which acts at least in part as a result of events within the free fall area near the nozzle. The embodiment shown in Fig. 8 allows for a system and method of trapping these media before they become a problem. Of course, other embodiments could be employed to accomplish the same function.

In addition, it should be understood that, in the claims and in the application, the term "comprising" is meant to have an inclusive meaning rather than an exclusive one. It should be interpreted in its most expansive form so as to afford the applicant the broadest coverage legally permissible.

The disclosure of a "vibration generator" should be understood to encompass disclosure of the act of "vibrating" - whether explicitly discussed or not-and, conversely, were there only disclosure of the act of "vibrating" such a disclosure should be understood to encompass disclosure of a "vibration generator" or a "vibrator." Such changes and alternative terms are to be understood to be explicitly included in the description.

## Claims

1. A flow cytometer nozzle unclogging and de-bubbling tool which is hand-held and suitable for cleaning the nozzle while the nozzle is present on the flow cytometer in situ comprising:
a. a source of energy (1) which provides electrical energy;
b. a transfer element (2) coupled to the source of energy (1) and conducting said electrical energy;
c. a hand held energy converter (3) coupled to the transfer element (2) which creates mechanical oscillations from said electrical energy;
**characterized in that** the flow cytometer nozzle unclogging and de-bubbling tool further comprises
d. a portable device (4) coupled to the energy converter (3) and providing the mechanical oscillations to an exterior surface of the flow cytometer nozzle, wherein the portable device (4) comprises an attachment end (5) that receives the mechanical vibrations from the transfer element (2) and an activating end (6) configured for coupling to the nozzle.

2. The tool as claimed in claim 1, further **characterized in that** activating end (6) of the portable device (4) comprises a cup surface (7) configured to cup the nozzle tip of the flow cytometer nozzle, wherein the cup surface (7) comprises a cavity approximately 1.27 cm (0.5 inches) high and approximately 0.76 cm (0.3 inches) wide, or wherein the cavity comprises a hole approximately 0.63 cm (0.25 inches) in diameter and approximately 1.27cm (0.5 inches) high.

3. The tool as claimed in claim 1 or claim 2, **characterized in that** the tool further comprises a self alignment guide integral to the portable device (4) which allows the portable device (4) to self align with the exterior surface of the flow cytometer nozzle.

4. The tool as claimed in claim 1, **characterized in that** the tool further comprises a compressible coupling element affixed to the portable device (4) which has at least one three dimensional surface.

5. The tool as claimed in claim 1, **characterized in that** the tool further comprises a cup surface (7) configured to cup a nozzle tip of the flow cytometer nozzle.

6. The tool as claimed in claim 5, **characterized in that** the tool further comprises an oscillation coupling element held within the cup surface (7) configured to cup the exterior surface of the nozzle tip of the flow cytometer nozzle.

7. The tool as claimed in claim 6, **characterized in that** the oscillation coupling element held within the cup surface (7) configured to cup the exterior surface of the nozzle tip of the flow cytometer nozzle comprises a solid material.

8. The tool as claimed in claim 6, **characterized in that** the oscillation coupling element held within the cup surface (7) configured to cup the exterior surface of the nozzle tip of the flow cytometer nozzle comprises a liquid material.

9. The tool as claimed in claim 8, **characterized in that** the tool further comprises a fluid retaining element (7) with a first side affixed to the portable member and a second side which conforms to the exterior of the flow cytometer nozzle with the first side and the second side and the cup surface configured to cup the exterior surface of a flow cytometer nozzle.

10. The tool as claimed in claim 9, **characterized in that** the tool further comprises a liquid evacuation (12) element which connects the cup surface (7) configured to cup the exterior surface of the flow cytometer with the surface of the portable device (4) to remove liquid from the cup surface (7) configured to cup the exterior surface of the nozzle tip of the flow cytometer nozzle.

11. The tool as claimed in claim 1, **characterized in that** the tool further comprises a female threaded element.

12. The tool as claimed in claim 11, **characterized in that** the tool further comprises a plurality of interchangeable portable devices, each interchangeable portable device having a cavity or surface configured to approximately match the exterior surface of the flow cytometer nozzle or the nozzle tip.

13. The tool as claimed in claims 1, 5, 8, 9, or 10, **characterized in that** the tool further comprises an oscillation selection element which drives the energy converter (3) at one of multiple selectable oscillation parameters.

14. The tool as claimed in claim 13, **characterized in that** the oscillation selection element allows an operator to set or select the desired power level of the source of energy (1) prior to or during use.

15. The tool as claimed in claim 13, **characterized in that** the oscillation selection element allows an operator to sweep a range of oscillations prior to or during use.

16. The tool as clamed in claim 13, **characterized in that** the oscillation selection parameter is selected to optimize one or more of the following operations: nozzle cleaning, gas dislocation, particle disintegration, and sperm cell sorting.

## Patentansprüche

1. Gerät zum Entfernen von Verstopfungen und Blasen aus einer Durchflusszytometerdüse, das handgehalten ist und das für die Reinigung der Düse geeignet ist, während die Düse an dem Durchflusszytometer an Ort und Stelle angebracht ist, umfassend:
a. eine Energiequelle (1), die elektrische Energie bereitstellt;
b. ein Transferelement (2), das an die Energiequelle (1) gekoppelt ist und das elektrische Energie leitet;
c. einen handgehaltenen Energiekonverter (3), der an das Transferelement (2) gekoppelt ist, das mechanische Oszillationen aus der elektrischen Energie erzeugt;
**dadurch gekennzeichnet, dass** das Gerät zum Entfernen von Verstopfungen und Blasen aus einer Durchflusszytometerdüse ferner umfasst
d. eine tragbare Vorrichtung (4), die an den Energiekonverter (3) gekoppelt ist und die die mechanischen Oszillationen an eine Außenoberfläche von der Durchflusszytometerdüse liefert, wobei die tragbare Vorrichtung (4) ein Anschlussende (5), das die mechanischen Vibrationen von dem Transferelement (2) empfängt und ein Aktivierungsende (6) umfasst, das für die Kopplung an die Düse ausgelegt ist.

2. Gerät nach Anspruch 1, ferner **dadurch gekennzeichnet** das das Aktivierungsende (6) der tragbaren Vorrichtung (4) eine Umschließungsoberfläche (7) umfasst, die auf die Umschließung von der Düsenspitze von der Durchflusszytometerdüse ausgelegt ist, wobei die Umschließungsoberfläche (7) eine Höhlung umfasst, die etwa 1,27 cm (0,5 Inch) hoch und etwa 0,76 cm (0,3 Inch) breit ist, oder wobei die Höhlung ein Loch umfasst, das einen Durchmesser von 0,63 cm (0,25 Inch) hat und das etwa 1,27 cm (0,5 Inch) hoch ist.

3. Gerät nach Anspruch 1 oder 2, **dadurch gekennzeichnet, dass** das Gerät ferner eine Selbstausrichtungsführung umfasst, die ein integraler Bestandteil der tragbaren Vorrichtung (4) ist und die es der tragbaren Vorrichtung (4) ermöglicht, sich selbst mit der Außenoberfläche von der Durchflusszytometerdüse auszurichten.

4. Gerät nach Anspruch 1, **dadurch gekennzeichnet, dass** das Gerät ferner ein komprimierbares Kopplungselement umfasst, das an der tragbaren Vorrichtung (4) befestigt ist und das mindestens eine dreidimensionale Oberfläche hat.

5. Gerät nach Anspruch 1, **dadurch gekennzeichnet, dass** das Gerät ferner eine Umschließungsoberfläche (7) umfasst, die darauf ausgelegt ist, die Düsenspitze von der Durchflusszytometerdüse zu umschließen.

6. Gerät nach Anspruch 5, **dadurch gekennzeichnet, dass** das Gerät ferner ein Oszillationskopplungselement umfasst, das innerhalb der Umschließungsoberfläche (7) gehalten ist, die darauf ausgelegt ist, die Außenoberfläche von der Düsenspitze von der Durchflusszytometerdüse zu umschließen,.

7. Gerät nach Anspruch 6, **dadurch gekennzeichnet, dass** das Oszillationskopplungselement, das innerhalb der Umschließungsoberfläche (7) gehalten ist, die darauf ausgelegt ist, die Außenoberfläche von der Düsenspitze von der Durchflusszytometerdüse zu umschließen, ein festes Material umfasst.

8. Gerät nach Anspruch 6, **dadurch gekennzeichnet, dass** das Oszillationskopplungselement, das innerhalb der Umschließungsoberfläche (7) gehalten ist, die darauf ausgelegt ist, die Außenoberfläche von der Düsenspitze von der Durchflusszytometerdüse zu umschließen, ein flüssiges Material umfasst.

9. Gerät nach Anspruch 8, **dadurch gekennzeichnet, dass** das Gerät ferner ein Fluidrückhalteelement (7) umfasst, das eine erste Seite hat, die an dem tragbaren Element befestigt ist, und eine zweite Seite hat, die an die Außenoberfläche von der Durchflusszytometerdüse angepasst ist, wobei die erste Seite, die zweite Seite und die Umschließungsoberfläche darauf ausgelegt sind, die Außenoberfläche von der Düsenspitze von einer Durchflusszytometerdüse zu umschließen.

10. Gerät nach Anspruch 9, **dadurch gekennzeichnet, dass** das Gerät ferner ein Flüssigkeitsevakuierungs (12) -Element umfasst, das die Umschließungsoberfläche (7), die darauf ausgelegt ist, die Außenoberfläche von dem Durchflusszytometer zu umschließen, mit der Oberfläche von der tragbaren Vorrichtung (4) verbindet, um aus der Umschließungsoberfläche (7), die darauf ausgelegt ist, die Außenoberfläche von der Düsenspitze von der Durchflusszytometerdüse zu umschließen, Flüssigkeit zu entfernen.

11. Gerät nach Anspruch 1, **dadurch gekennzeichnet, dass** das Gerät ferner ein Innengewindeelement umfasst.

12. Gerät nach Anspruch 11, **dadurch gekennzeichnet, dass** das Gerät ferner eine Vielzahl von austauschbaren tragbaren Vorrichtungen umfasst, wobei jede der austauschbaren tragbaren Vorrichtungen eine Höhlung oder eine Oberfläche hat, die darauf ausgelegt ist, um in etwa mit der Außenoberfläche von der Durchflusszytometerdüse oder der Düsenspitze zusammenzupassen.

13. Gerät nach einem der Ansprüche 1, 5, 8, 9 oder 10, **dadurch gekennzeichnet, dass** das Gerät ferner ein Oszillationsauswahlelement umfasst, das den Energiekonverter (3) an einem von mehreren auswählbaren Oszillationsparametern ansteuert.

14. Gerät nach Anspruch 13, **dadurch gekennzeichnet, dass** das Oszillationsauswahlelement einem Anwender erlaubt, das gewünschte Energieniveau von der Energiequelle (1) vor oder während der Verwendung einzustellen oder auszuwählen.

15. Gerät nach Anspruch 13, **dadurch gekennzeichnet, dass** das Oszillationsauswahlelement einem Anwender erlaubt, einen Bereich von Oszillationen vor oder während der Verwendung abzutasten.

16. Gerät nach Anspruch 13, **dadurch gekennzeichnet, dass** der Oszillationsauswahlparameter so ausgewählt ist, um einen oder mehrere der folgenden Vorgänge zu optimieren: Düsenreinigung, Gasdislokation, Partikeldesintegration und Spermazellensortierung.

## Revendications

1. Outil de débouchage et de débullage d'une buse d'un cymomètre en flux, qui est tenu à la main et qui est approprié au nettoyage de la buse tandis que la buse est présente sur le cymomètre en flux in situ comprenant :
a. une source d'énergie (1) qui fournit une énergie électrique ;
b. un élément de transfert (2) couplé à la source d'énergie (1) et qui conduit ladite énergie électrique ;
c. un convertisseur d'énergie tenu à la main (3) couplé à l'élément de transfert (2) qui crée des oscillations mécaniques à partir de ladite énergie électrique ;
**caractérisé en ce que** l'outil de débouchage et de débullage d'une buse d'un cymomètre en flux comprend en outre :
d. un dispositif portatif (4) couplé au convertisseur d'énergie (3) et qui fournit les oscillations mécaniques à une surface extérieure de la buse d'un cymomètre en flux, dans lequel le dispositif portatif (4) comprend une extrémité de fixation (5) qui reçoit les vibrations mécaniques en provenance de l'élément de transfert (2) et une extrémité d'activation (6) configurée de façon à s'accoupler à la buse.

2. Outil selon la revendication 1, **caractérisée en outre en ce que** l'extrémité d'activation (6) du dispositif portatif (4) comprend une surface en cupule (7) configurée de façon à entourer l'embout de buse de la buse d'un cymomètre en flux, dans lequel la surface en cupule (7) comprend une cavité qui présente une hauteur approximativement égale à 1,27 cm (0,5 pouce) et une largeur approximativement égale à 0,76 cm (0,3 pouce), ou dans lequel la cavité comprend un trou dont le diamètre est approximativement égal à 0,63 cm (0,25 pouce) et dont la hauteur est approximativement égale à 1,27 cm (0,5 pouce).

3. Outil selon la revendication 1 ou la revendication 2, **caractérisé en ce que** l'outil comprend en outre un guide d'auto-alignement d'une pièce avec le dispositif portatif (4), qui permet au dispositif portatif (4) de s'auto-aligner avec la surface extérieure de la buse d'un cymomètre en flux.

4. Outil selon la revendication 1, **caractérisé en ce que** l'outil comprend en outre un élément d'accouplement compressible fixé sur le dispositif portatif (4), qui présente au moins une surface tridimensionnelle.

5. Outil selon la revendication 1, **caractérisé en ce que** l'outil comprend en outre une surface en cupule (7) configurée de façon à entourer un embout de buse de la buse d'un cymomètre en flux.

6. Outil selon la revendication 5, **caractérisé en ce que** l'outil comprend en outre un élément de couplage d'oscillations retenu à l'intérieur de la surface en cupule (7) configurée de façon à entourer la surface extérieure de l'embout de buse de la buse d'un cymomètre en flux.

7. Outil selon la revendication 6, **caractérisé en ce que** l'élément de couplage d'oscillations retenu à l'intérieur de la surface en cupule (7) configurée de façon à entourer la surface extérieure de l'embout de buse de la buse d'un cymomètre en flux, comprend un matériau solide.

8. Outil selon la revendication 6, **caractérisé en ce que** l'élément de couplage d'oscillations retenu à l'intérieur de la surface en cupule (7) configurée de façon à entourer la surface extérieure de l'embout de buse de la buse d'un cymomètre en flux, comprend un matériau liquide.

9. Outil selon la revendication 8, **caractérisé en ce que** l'outil comprend en outre un élément de retenue de fluide (7) dont un premier côté est fixé sur l'élément portatif et dont un second côté se conforme à l'extérieur de la buse d'un cymomètre en flux, le premier côté, le second côté et la surface en cupule étant configurés de façon à entourer la surface extérieure d'une buse d'un cymomètre en flux.

10. Outil selon la revendication 9, **caractérisé en ce que** l'outil comprend en outre un élément d'évacuation de liquide (12) qui est connecté à la surface en cupule (7) configurée de façon à entourer la surface extérieure du cymomètre en flux avec la surface du dispositif portatif (4) de façon à retirer un liquide de la surface en cupule (7) configurée de façon à entourer la surface extérieure de l'embout de buse de la buse d'un cymomètre en flux.

11. Outil selon la revendication 1, **caractérisé en ce que** l'outil comprend en outre un élément fileté femelle.

12. Outil selon la revendication 11, **caractérisé en ce que** l'outil comprend en outre une pluralité de dispositifs portatifs interchangeables, chaque dispositif portatif interchangeable présentant une cavité ou une surface configurée de façon à correspondre approximativement à la surface extérieure d'une buse d'un cymomètre en flux ou à un embout de buse.

13. Outil selon l'une quelconque des revendications 1, 5, 8, 9 ou 10, **caractérisé en ce que** l'outil comprend en outre un élément de sélection d'oscillations qui commande le convertisseur d'énergie (3) selon l'un parmi de multiples paramètres d'oscillations qu'il est possible de sélectionner.

14. Outil selon la revendication 13, **caractérisé en ce que** l'élément de sélection d'oscillations permet à un opérateur de fixer ou de sélectionner le niveau de puissance souhaité de la source d'énergie (1) avant son utilisation ou au cours de celle-ci.

15. Outil selon la revendication 13, **caractérisé en ce que** l'élément de sélection d'oscillations permet à un opérateur de balayer une plage d'oscillations avant son utilisation ou au cours de celle-ci.

16. Outil selon la revendication 13, **caractérisé en ce que** le paramètre de sélection d'oscillations est sélectionné de façon à optimiser une ou plusieurs des opérations suivantes : le nettoyage d'une buse, l'élimination d'un gaz, la désintégration de particules, et le tri de cellules spermatiques.
